(19)

Europäisches
Patentamt
European
Patent Office
Office européen
des brevets

(11) **EP 2 345 697 A1**

(12) **EUROPEAN PATENT APPLICATION**

(43) Date of publication:
**20.07.2011 Bulletin 2011/29**

(51) Int Cl.:
*C08L 23/08* (2006.01)    *C08L 53/00* (2006.01)
*C08J 5/18* (2006.01)

(21) Application number: **10191908.2**

(22) Date of filing: **19.11.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **15.01.2010 US 688127**

(71) Applicant: **Tredegar Film Products Corporation
Richmond, VA 23225 (US)**

(72) Inventor: **Peacock, Andrew J.
Richmond, VA 23225 (US)**

(74) Representative: **van Westenbrugge, Andries et al
Nederlandsch Octrooibureau
J.W. Frisolaan 13
2517 JS Den Haag (NL)**

(54) **Improved elastic blends of high density polyethylene polymers with olefinic block copolymers**

(57)    Blends of ethylene/α-olefin block interpolymers and high density polyethylene polymers are disclosed and include an ethylene/α-olefin block interpolymer produced using a chain shuttling catalyst and a high density polyethylene polymer having a density of greater than about 0.940 g/cm³. The polymer blends are particularly suited for making films.

EP 2 345 697 A1

**Description**

This disclosure relates generally to polyolefin blends and monolayer films produced from the polyolefin blends. More specifically, the disclosure is directed to blends of olefinic block copolymers (ethylene/α-olefm block interpolymers) produced using chain shuttling catalyst systems and high density polyethylene polymers, and monolnnayer films formed from such blends.

Elastomeric materials have the ability to expand to fit over or around an object, and then retract to provide a snug fit around the object. Elastic films are well known in the art and are used for many applications. In particular, elastic films are often used in disposable absorbent articles, such as diapers and training pants. Generally speaking, elastic materials are often found inside panels, ears, side tabs, waist bands and leg cuffs of disposable absorbent articles, to provide improved fit, comfort and leakage control. In some applications, such as adult incontinent articles, elastic films may be used to form the entire chassis of the articles to provide all over fit and comfort.

Various thermoplastic elastomeric compositions are well-known and include thermoplastic urethanes, thermoplastic polyesters, amorphous polypropylenes, chlorinated polyethylenes, ethylene/propylene rubbers, crosslinked and uncrosslinked ethylenepropylene-nonconjugated diene monomer (EPDM) systems, and styrene block copolymers.

Polyolefin-based thermoplastic elastomers (TPEs) have received considerable attention due to their chemical inertness, low density and low cost compared with other TPEs. Homogeneous ethylene-octene (EO) copolymers, synthesized via contemporary catalyst technology, with low crystallinity and low density (0.86-0.88 g/cm$^3$) exhibit the characteristics of thermoplastic elastomers. The elastomeric properties are believed to depend on the fringed micellar crystals which serve as network junctions. However, the low melting points of fringed micellar crystals have limited the application of elastic EO copolymers at higher temperatures, i.e. above room temperature.

Recently, The Dow Chemical Company developed a chain shuttling catalyst technology that can be used to synthesize novel olefin block copolymers (OBC) in a continuous process. The block copolymers synthesized by the chain shuttling catalyst technology consist of crystallizable ethylene/α-olefm blocks (hard) with very low comonomer content and high melting temperature, alternating with amorphous ethylene-octene blocks (soft) with high comonomer content. Thus, OBC is also called ethylene/α-olefin block interpolymer. In the present application, the terms "ethylene/α-olefm block interpolymer" and "olefin block copolymer" or "OBC" are used interchangeably.

Elastomeric polymers are often tacky or sticky and this can and does present issues in the manufacture of films from such resins. For example, elastomeric films have a tendency to stick to rollers and other manufacturing equipment. In addition, the tackiness of the elastomeric film creates a tendency of successive layers of film to stick to one another, or "block" when the film is wound on a roll for storage and transport. To address the handling and blocking issues, it is customary for elastic films to be made with so-called "skin" layers on either side of an elastomeric core. The skin layers, typically made of polyolefins such as polyethylene, provide a physical separation between successive layers of elastomers and thus are effective to prevent the layers from sticking together (i.e. "blocking").

One problem with using skin layers, however, is that the skin layers are not elastic, or at least are less elastic than the elastomeric layer. Thus, the presence of the skin layers tends to limit the ability of the film to stretch and recover. Another problem with using skin layers is that they add cost for laminating the elastic core with less elastic layers.

Accordingly, there is a need to provide a monolayer elastomeric film without the problem of blocking but still keeping the desirable elasticity of the film.

**SUMMARY OF THE DISCLOSURE**

In general, the disclosure is directed to a polymer blend composition, the blend composition comprising an OBC having an average block index greater than zero and up to about 1 and a molecular weight distribution, $M_w/M_n$, greater than about 1.3; and a high density polyethylene (HDPE) polymer having a density of greater than about 0.940 g/cm$^3$. The OBC can be produced using a chain shuttling catalyst. In one embodiment, the composition comprises about 70 wt% to about 90 wt% of the OBC and from about 10 wt% to about 30 wt% of the HDPE polymer based on the total combined weight of the OBC and the HDPE polymer.

In one embodiment, the disclosure provides a polymer blend composition comprising an ethylene/α-olefm block interpolymer and a high density polyethylene polymer. The ethylene/α-olefm block interpolymer is a linear and multiblock copolymer with at least three blocks, and the ethylene content of the ethylene/α-olefin block interpolymer is at least 50 mole percent.

In another embodiment, the disclosure is directed to a polymer blend composition, the blend composition including a chain shuttling catalyst-produced ethylene/α-olefin block interpolymer. The interpolymer is a copolymer of ethylene and at least one $C_3$ to $C_{20}$ α-olefin, and has a density of from about 0.860 to about 0.915 g/cm$^3$ and a melt index of from about 0.01 to about 100 g/10 min.

In yet another embodiment, the disclosure provides a monolayer film having non-blocking properties comprising a polymer blend composition of an ethylene/α-olefin block interpolymer and a high density polyethylene polymer, wherein the high density polyethylene polymer is co-crystallized with the linear sequences of the ethylene/α-olefin block interpolymer.

In other embodiments, the disclosure is directed to articles including, using, containing, covered with or coated with such films and/or polymer blend compositions.

## DETAILED DESCRIPTION

The ethylene/α-olefin interpolymers of the embodiments are manufactured by The Dow Chemical Company and sold under the trademark designation "Infuse™". The interpolymers and the process for making the interpolymers are disclosed in U.S. Patent No. 7,557,147; U.S. Patent No. 7,608,668; U.S. Patent Publication No. 2007167314; and U.S. Patent Publication No. 20080311812, all of which are hereby incorporated by references in this regard.

The ethylene/α-olefin interpolymers of the embodiments comprise ethylene and one or more copolymerizable α-olefin comonomers in polymerized form, characterized by multi blocks or segments of two or more polymerized monomer units differing in chemical or physical properties (multi-block copolymer).

The ethylene/α-olefin interpolymers are characterized by an average block index, ABI, which is greater than zero and up to about 1.0 and a molecular weight distribution, $M_w/M_n$, greater than about 1.3. The average block index, ABI, is the weight average of the block index ("BI") for each of the polymer fractions obtained in preparative TREF (Temperature Rising Elution Fractionation) from 20°C to 110°C, with an increment of 5°C:

$$ABI = \Sigma(w_i BI_i)$$

where $BI_i$ is the block index for the $i$th fraction of the ethylene/α-olefin interpolymer obtained in preparative TREF, and $w_i$ is the weight percentage of the $i$th fraction.

For each polymer fraction, BI is defined by one of the two following equations (both of which give the same BI value):

$$BI = \frac{\frac{1}{T_X} - \frac{1}{T_{XO}}}{\frac{1}{T_A} - \frac{1}{T_{AB}}} \text{ or } BI = \frac{LnP_X - LnP_{XO}}{LnP_A - LnP_{AB}}$$

where $T_X$ is the preparative ATREF (analytical TREF) elution temperature for the $i$th fraction (preferably expressed in Kelvin), $P_X$ is the ethylene mole fraction for the $i$th fraction, which can be measured by NMR (Nuclear Magnetic Resonance spectroscopy) or IR (Infra-Red spectroscopy). $P_{AB}$ is the ethylene mole fraction of the whole ethylene/α-olefin interpolymer (before fractionation), which also can be measured by NMR or IR. $T_A$ and $P_A$ are the ATREF elution temperature and the ethylene mole fraction for pure "hard segments" (which refer to the crystallizable segments of the interpolymer). As a first order approximation, the $T_A$ and $P_A$ values are set to those for high density polyethylene homopolymer, if the actual values for the "hard segments" are not available.

$T_{AB}$ is the ATREF temperature for a random copolymer of the same composition and having an ethylene mole fraction of $P_{AB}$. $T_{AB}$ can be calculated from the mole fraction of ethylene (measured by NMR) using the following equation:

$$Ln\, P_{AB} = \alpha/T_{AB} + \beta$$

where a and β are two constants which can be determined by calibration using a number of known random ethylene copolymers. It should be noted that α and β may vary from instrument to instrument. Moreover, one would need to create their own calibration curve with the polymer composition of interest and also in a similar molecular weight range as the fractions. There is a slight molecular weight effect. If the calibration curve is obtained from similar molecular weight ranges, such effect would be essentially negligible. In some embodiments, random ethylene copolymers satisfy the following relationship:

$$\mathrm{Ln\ P} = -237.83/\mathrm{T_{ATREF}} + 0.639$$

The above calibration equation relates the mole fraction of ethylene, P, to the ATREF elution temperature, $T_{ATREF}$, for narrow composition random copolymers and/or preparative TREF fractions of broad composition random copolymers.

$T_{XO}$ is the ATREF temperature for a random copolymer of the same composition and the same molecular weight and having an ethylene mole fraction of $P_X$. $T_{XO}$ can be calculated from $\mathrm{Ln\ P_X} = \alpha/T_{XO} + \beta$. Conversely, $P_{XO}$ is the ethylene mole fraction for a random copolymer of the same composition and having an ATREF temperature of $T_X$, which can be calculated from $\mathrm{Ln\ P_{XO}} = \alpha/T_X + \beta$.

Another characteristic of the ethylene/$\alpha$-olefin interpolymer is that the interpolymer comprises at least one polymer fraction that can be obtained by preparative TREF, wherein the fraction has a block index greater than about 0.1 and up to about 1.0 and the interpolymer having a molecular weight distribution, $M_w/M_n$, greater than about 1.3.

In addition to an average block index and individual fraction block indices, the ethylene/$\alpha$-olefin interpolymer is characterized by one or more of the properties described as follows.

In one aspect, the ethylene/$\alpha$-olefm interpolymers have a $M_w/M_n$ from about 1.7 to about 3.5 and at least one melting point, $T_m$, in degrees Celsius and density, d, in grams/cubic centimeter, wherein the numerical values of the variables correspond to the relationship:

$$T_m > -2002.9 + 4538.5(d) - 2422.2(d)^2$$

The interpolymers exhibit melting points substantially independent of the density, particularly when the density is between about 0.87 to about 0.95 g/cm$^3$.

In another aspect, the ethylene/$\alpha$-olefin interpolymer has a $M_w/M_n$ from about 1.7 to about 3.5, and is characterized by a heat of fusion $\Delta H$ in J/g, and a $\Delta T$, in degree Celsius defined as the temperature difference between the tallest Differential Scanning Calorimetry ("DSC") peak and the tallest Crystallization Analysis Fractionation ("CRYSTAF") peak. $\Delta T$ and $\Delta H$ satisfy the following relationships:

$\Delta T > -0.1299(\Delta H) + 62.81$, for $\Delta H$ greater than zero and up to 130 J/g.

$\Delta T \geq 48°C$, for greater than 130 J/g.

The CRYSTAF peak is determined using at least 5 percent of the cumulative polymer (that is, the peak must represent at least 5 percent of the cumulative polymer), and if less than 5 percent of the polymer has an identifiable CRYSTAF peak, then the CRYSTAF temperature is 30°C.

In yet another aspect, the ethylene/$\alpha$-olefin interpolymer is characterized by an elastic recovery, Re, in percent at 300 percent strain and 1 cycle measured on a compression-molded film of an ethylene/$\alpha$-olefm interpolymer, and has a density, d, in grams/cubic centimeter, wherein the numerical values of Re and d satisfy the following relationship when ethylene/$\alpha$-olefin interpolymer is substantially free of a cross-linked phase:

$$Re > 1481 - 1629(d).$$

In yet another aspect, the ethylene/$\alpha$-olefin interpolymer has a molecular fraction which elutes between 40°C and 130°C when fractionated using TREF, characterized in that said fraction has a molar comonomer content of at least 5 percent higher than that of a comparable random ethylene interpolymer fraction eluting between the same temperatures, wherein the comparable random ethylene interpolymer contains the same comonomer(s), and has a melt index, density, and molar comonomer content (based on the whole polymer) within 10 percent of that of the block interpolymer.

In yet another aspect, the ethylene/$\alpha$-olefm interpolymers is characterized by a storage modulus ratio, G'(25°C) /G'(100°C). The ratio of G'(25°C)/G'(100°C) is from about 1:1 to about 10:1.

Additionally, the ethylene/$\alpha$-olefm interpolymers can have a melt index, $I_2$, from 0.01 to 2000 g/10 minutes, preferably from 0.01 to 1000 g/10 minutes, more preferably from 0.01 to 500 g/10 minutes, and especially from 0.01 to 100 g/10 minutes. In certain embodiments, the ethylene/$\alpha$-olefin interpolymers have a melt index, $I_2$, from 0.01 to 10 g/10 minutes, from 0.5 to 50 g/10 minutes, from 1 to 30 g/10 minutes, from 1 to 6 g/10 minutes or from 0.3 to 10 g/10 minutes. In certain embodiments, the melt index for the ethylene/α-olefin polymers is 1 g/10 minutes, 3 g/10 minutes or 5 g/10 minutes.

The interpolymers can have molecular weights, $M_w$, from 1,000 g/mole to 5,000,000 g/mole, preferably from 1,000 g/mole to 1,000,000 g/mole, more preferably from 10,000 g/mole to 500,000 g/mole, and especially from 10,000 g/mole to 300,000 g/mole. The density of the polymers can be from about 0.80 to about 0.99 g/cm$^3$ and preferably for ethylene containing polymers from about 0.85 g/cm$^3$ to about 0.97 g/cm$^3$. In certain embodiments, the density of the ethylene/α-olefm polymers ranges from about 0.860 to about 0.925 g/cm$^3$ or about 0.867 to about 0.910 g/cm$^3$.

The ethylene/α-olefm interpolymers used in the embodiments of the invention are interpolymers of ethylene with at least one $C_3$-$C_{20}$ α-olefin. In one embodiment, copolymers of ethylene and a $C_3$-$C_{20}$ α-olefm are especially used. The interpolymers may further comprise $C_4$-$C_{18}$ diolefin and/or alkenylbenzene. Suitable unsaturated comonomers useful for polymerizing with ethylene include, for example, ethylenically unsaturated monomers, conjugated or nonconjugated dienes, polyenes, alkenylbenzenes, etc. Examples of such comonomers include $C_3$-$C_{20}$ α-olefin such as propylene, isobutylene, 1-butene, 1-hexene, 1-pentene, 4-methyl-l-pentene, 1-heptene, 1-octene, 1-nonene, 1-decene, and the like. 1-Butene and 1-octene are especially preferred. Other suitable monomers include styrene, halo-or alkyl-substituted styrenes, vinylbenzocyclobutane, 1,4-hexadiene, 1,7-octadiene, and naphthenics (e.g. cyclopentene, cyclohexene and cyclooctene).

While ethylene/α-olefin block interpolymers are preferred polymers, other ethylene/olefin polymers may also be used. Olefins as used herein refer to a family of unsaturated hydrocarbon-based compounds with at least one carbon-carbon double bond. Depending on the selection of catalysts, any olefin may be used in embodiments of the invention. In one embodiment, suitable olefins are $C_3$-$C_{20}$ aliphatic and aromatic compounds containing vinylic unsaturation, as well as cyclic compounds, such as cyclobutene, cyclopentene, dicyclopentadiene, and norbornene, including but not limited to, norbornene substituted in the 5 and 6 positions with $C_1$-$C_{20}$ hydrocarbyl or cyclohydrocarbyl groups. Also included are mixtures of such olefins as well as mixtures of such olefins with $C_4$-$C_{40}$ diolefin compounds.

Examples of olefin monomers include propylene, isobutylene, 1-butene, 1-pentene, 1-hexene, 1-heptene, 1-octene, 1-nonene, 1-decene, and 1-dodecene, 1-tetradecene, 1-hexadecene, 1-octadecene, 1-eicosene, 3-methyl-1-butene, 3-methyl-1-pentene, 4-methyl-1-pentene, 4,6-dimethyl-1-heptene, 4-vinylcyclohexene, vinylcyclohexane, norbornadiene, ethylidene norbornene, cyclopentene, cyclohexene, dicyclopentadiene, cyclooctene, $C_4$-$C_{40}$ dienes, including but not limited to 1,3-butadiene, 1,3-pentadiene, 1,4-hexadiene, 1,5-hexadiene, 1,7-octadiene, 1,9-decadiene, other $C_4$-$C_{40}$ α-olefins, and the like. In certain embodiments, the α-olefin is propylene, 1-butene, 1-pentene, 1-hexene, 1-octene or a combination thereof. Although any hydrocarbon containing a vinyl group potentially may be used in embodiments of the invention, practical issues such as monomer availability, cost, and the ability to conveniently remove unreacted monomer from the resulting polymer may become more problematic as the molecular weight of the monomer becomes too high.

The polymer blend composition also includes a high density polyethylene (HDPE) polymer. As used herein, the terms "high density polyethylene" polymer and "HDPE" polymer refer to a homopolymer or copolymer of ethylene having a density greater than about 0.940 g/cm$^3$. Polymers having more than two types of monomers, such as terpolymers, are also included within the term "copolymer" as used herein. The comonomers that are useful in general for making HDPE copolymers include α-olefins, such as $C_3$-$C_{20}$ α-olefins. In one embodiment, $C_3$-$C_{12}$ α-olefins are used. The α-olefin comonomer can be linear or branched, and two or more comonomers can be used, if desired. Examples of suitable comonomers include linear $C_3$-$C_{12}$ α-olefins, and α-olefins having one or more $C_1$-$C_3$ alkyl branches, or an aryl group. Specific examples include propylene; 3-methyl-1-butene; 3,3-dimethyl-1-butene; 1-pentene; 1-pentene with one or more methyl, ethyl or propyl substituents; 1-hexene with one or more methyl, ethyl or propyl substituents; 1-heptene with one or more methyl, ethyl or propyl substituents; 1-octene with one or more methyl, ethyl or propyl substituents; 1-nonene with one or more methyl, ethyl or propyl substituents; ethyl, methyl or dimethyl-substituted 1-decene; 1-dodecene; and styrene. It should be appreciated that the list of comonomers above is merely exemplary, and is not intended to be limiting. In one embodiment, comonomers include propylene, 1-butene, 1-pentene, 4-methyl-1-pentene, 1-hexene, 1-octene and styrene.

Other useful comonomers include polar vinyl, conjugated and non-conjugated dienes, acetylene and aldehyde monomers, which can be included in minor amounts in terpolymer compositions. Non-conjugated dienes useful as comonomers preferably are straight chain, hydrocarbon di-olefins or cycloalkenyl-substituted alkenes, having 6 to 15 carbon atoms. Suitable non-conjugated dienes include, for example: (a) straight chain acyclic dienes, such as 1,4-hexadiene and 1,6-octadiene; (b) branched chain acyclic dienes, such as 5-methyl-1,4-hexadiene; 3,7-dimethyl-1,6-octadiene and 3,7-dimethyl-1,7-octadiene; (c) single ring alicyclic dienes, such as 1,4-cyclohexadiene; 1,5-cyclo-octadiene and 1,7-cyclododecadiene; (d) multi-ring alicyclic fused and bridged ring dienes, such as tetrahydroindene; norbornadiene; methyl-tetrahydroindene; dicyclopentadiene (DCPD); bicyclo-(2.2.1)-hepta-2,5-diene; alkenyl, alkylidene, cycloalkenyl and cycloalkylidene norbornenes, such as 5-methylene-2-norbornene (MNB), 5-propenyl-2-norbornene, 5-isopropylidene-2-norbomene, 5-(4-cyclopentenyl)-2-norbornene, 5-cyclohexylidene-2-norbornene, and 5-vinyl-2-norbornene (VNB); and (e) cycloalkenyl-substituted alkenes, such as vinyl cyclohexene, allyl cyclohexene, vinyl cyclooctene, 4-vinyl cyclohexene, allyl cyclodecene, and vinyl cyclododecene. Of the non-conjugated dienes typically used, the preferred dienes are dicyclopentadiene, 1,4-hexadiene, 5-methylene-2-norbornene, 5-ethylidene-2-norbomene, and tetra-cyclo-($\Delta$-11,12)-5,8-dodecene. In one embodiment, diolefins are 5-ethylidene-2-norbornene (ENB), 1,4-hexadiene, dicyclopentadiene (DCPD), norbornadiene, and 5-vinyl-2-norbornene (VNB).

In one embodiment, the HDPE polymer has a density of greater than about 0.940 $g/cm^3$. In another embodiment, the HDPE polymer has a density of from about 0.940 $g/cm^3$ to about 0.970 $g/cm^3$. In yet another embodiment, the HDPE polymer has a density of from about 0.940 $g/cm^3$ to about 0.960 $g/cm^3$.

In one embodiment, the HDPE polymer may have a melt index from about 0.01 to about 45 g/10 min, as measured in accordance with ASTM-D1238 condition E. The HDPE polymer may be produced using any conventional polymerization process, such as a solution, a slurry, or a gas-phase process, and a suitable catalyst, such as a Ziegler-Natta catalyst or a metallocene catalyst.

Although the HPDE polymer component of the OBC/HDPE blends of the invention has been discussed as a single polymer, blends of two or more such HDPE polymers having the properties described herein are also contemplated.

In one embodiment, the present invention provides a polymer blend composition, the blend composition including an ethylene/$\alpha$-olefin interpolymer and a HDPE polymer. The blend can include any of the ethylene/$\alpha$-olefin block interpolymers described herein. The blend can include any of the HDPE polymers described herein. The blend compositions can be formed using conventional equipment and methods, such as by dry blending the individual components and subsequently melt mixing in a mixer, or by mixing the components together directly in a mixer, such as a Banbury mixer, a Haake mixer, a Brabender internal mixer, or a single or twin-screw extruder including a compounding extruder and a side-arm extruder used directly downstream of a polymerization process.

Additionally, the blend compositions can optionally comprise other components that, in some instances, modify the properties of the product formed from the blend, such as a film, aid in the processing of the film, or modify the appearance of the film. Viscosity-reducing polymers and plasticizers can be added as processing aids. Other additives such as pigments, dyes, antioxidants, antistatic agents, slip agents, foaming agents, heat stabilizers, light stabilizers, inorganic fillers, organic fillers or a combination thereof can be added. These additives can be present in a monolayer film; or one, several, or all layers of a multilayer film. The amount of these components relative to the layer weight can be about 0.1 wt%, about 0.5 wt%, about 1 wt%, about 2 wt%, about 5 wt%, about 7 wt%, or about 10 wt%.

The blend compositions include at least about 70 wt% and up to about 90 wt% of the OBC polymer, and at least about 10 wt% and up to about 30 wt% of the HDPE polymer, with these weight percents based on the total combined weight of the OBC and HDPE polymers of the blend.

In one embodiment, the polymer blend composition includes a chain shuttling catalyst-produced ethylene/$\alpha$-olefin block interpolymer having an average block index greater than zero and up to about 1, and a molecular weight distribution, $M_w/M_n$, greater than about 1.3; and a high density polyethylene polymer having a density greater than about 0.940 $g/cm^3$. In another embodiment, the polymer blend composition includes a chain shuttling catalyst-produced ethylene/$\alpha$-olefin block interpolymer, the interpolymer being a copolymer of ethylene and at least one $C_3$ to $C_{20}$ $\alpha$-olefin having a density of about 0.865 to about 0.915 $g/cm^3$, a molecular weight distribution $M_w/M_n$ of about 1.7 to about 3.5, and a melt index of about 0.01 to about 100 g/10 min; and a high density polyethylene polymer being a homopolymer of ethylene or a copolymer of ethylene and at least one $C_3$ to $C_{12}$ $\alpha$-olefin and having a density of greater than about 0.940 $g/cm^3$.

In any of these embodiments, the OBC polymer, the HDPE polymer, or both, can be blends of such polymers, i.e. the OBC polymer component of the blend can itself be a blend of two or more OBC polymers having the characteristics described herein, and alternatively or additionally, the HDPE polymer component of the blend can itself be a blend of two or more HDPE polymers having the characteristics described herein.

Polymer blends are particularly suitable for film applications. The OBC/HDPE polymer blends of the invention can be used to form films having a single layer (monolayer films) or multiple layers (multilayer films). When used in multilayer films, the OBC/HDPE polymer blends can be used in any layer of the film, or in more than one layer of the film, as desired. When more than one layer of the film is formed of an OBC/HDPE polymer blend of the present invention, each such layer can be individually formulated; i.e. the layers formed of the OBC/HDPE polymer can be the same or different chemical composition, density, melt index, thickness, etc., depending upon the desired properties of the film. E.g. in the monolayer film, the ethylene/$\alpha$-olefin block interpolymer has a melt index of about 0.01 to about 100 g/10 min. In a further embodiment, the ethylene/$\alpha$-olefin block interpolymer is linear and multi-block copolymer with at least three blocks. In a further embodiment, the ethylene content of the ethylene/$\alpha$-olefin block interpolymer is at least 50 mole percent. The monolayer film may be a cast film or a blown film.

One aspect of the invention relates to the formation of monolayer films from the OBC/HDPE polymer blends of the present invention. These films may be formed by any number of well known extrusion or co-extrusion techniques discussed below. Films of the invention may be unoriented, uniaxially oriented or biaxially oriented. Physical properties of the film may vary depending on the film forming techniques used. Another aspect of the invention relates to the formation of multilayer films from the OBC/HDPE polymer blends of the present invention. Multiple-layer films may be formed by methods well known in the art. The total thickness of multilayer films may vary based upon the application desired. Those skilled in the art will appreciate that the thickness of individual layers for multilayer films may be adjusted based on desired end use performance, resin or copolymer employed, equipment capability and other factors. The materials forming each layer may be co-extruded through a co-extrusion feedblock and die assembly to yield a film with two or more layers adhered together but differing in composition.

As described below, the films can be cast films or blown films. The films can further be embossed, or produced or processed according to other known film processes. The films can be tailored to specific applications by adjusting the thickness, materials and order of the various layers, as well as the additives in each layer.

In one aspect, films containing an OBC/HDPE polymer blend, monolayer or multilayer, may be formed by using casting techniques, such as a chill roll casting process. For example, a composition can be extruded in a molten state through a flat die and then cooled to form a film. As a specific example, cast films can be prepared using a pilot scale commercial cast film line machine as follows. Pellets of the polymer are melted at a temperature ranging from about 175°C to about 300°C with the specific melt temperature being chosen to match the melt viscosity of the particular resins. In the case of a multilayer cast film, the two or more different melts are conveyed to a co-extrusion adapter that combines the two or more melt flows into a multilayer, co-extruded structure. This layered flow is distributed through a single manifold film extrusion die to the desired width. Alternatively a multi-manifold die can be employed in which the melt streams are combined within the die body prior to extrusion through the die opening. The die gap opening is typically about 0.015 to about 0.030 inches (about 380 to about 760 $\mu$m). The material is then drawn down to the final gauge. The material draw down ratio is typically about 7.5:1 to about 15:1 for 2.0 mil (50 $\mu$m) films. A vacuum box or air knife can be used to pin the melt exiting the die opening to a primary chill roll maintained at about 0°C to about 40°C. The resulting polymer film is collected on a winder. The film thickness can be monitored by a gauge monitor, and the film can be edge trimmed by a trimmer. One or more optional treaters can be used to surface treat the film, if desired. Such chill roll casting processes and apparatus are well known in the art, and are described, for example, in The Wiley Encyclopedia of Packaging Technology, Second Edition, A. L. Brody and K. S. Marsh, Ed., John Wiley and Sons, Inc., New York (1997). Although chill roll casting is one example, other forms of casting can be used.

In another aspect, films containing an OBC/HDPE polymer blend, monolayer or multilayer, may be formed using blown techniques, i.e. to form a blown film. For example, the composition can be extruded in a molten state through an annular die and then blown and cooled to form a tubular, blown film, which can then be axially slit and unfolded to form a flat film.

Yet another aspect of the disclosure relates to an article formed by extrusion coating. For example, a substrate material can be contacted with a hot molten polymer as the polymer exits the die. For instance, an already formed polypropylene film may be extrusion coated with an ethylene copolymer film as the latter is extruded through the die. Extrusion coatings are generally processed at higher temperatures than cast films, typically about 315 °C, in order to promote adhesion of the extruded material to the substrate. In one embodiment, the disclosure is directed to an OBC/HDPE film or coating on a flexible substrate such as a non-woven fabric to form a laminate, wherein the film or coating is formed of an OBC/HDPE polymer blend. The coating may be a monolayer film or a multi-layer film.

The films and coatings made from the polymer blends are also suitable for use in laminate structures; i.e. with a film or a coating as described herein disposed on or adjacent to at least one substrate. These films and coatings are also suitable for use as heat sealing or moisture barrier layers in single- or multi-layer structures.

It should be emphasized that the OBC/HDPE blends, mono-layer and multilayer films, coatings, laminates, and other structures can be produced by the methods described herein, or by other methods known in the art, and can use OBC and/or HDPE polymers produced by the methods described herein, or OBC and/or HDPE polymers produced by other methods known in the art.

Another aspect of the disclosure relates to a polymer product containing any one of the OBC/HDPE polymer blends. Such products include a number of film-based products, such as films made from the OBC/HDPE polymer blends, cast films, melt-blown films, co-extruded films, films made of the OBC/HDPE polymer blends, laminated films, extrusion coatings, multilayer films containing the OBC/HDPE polymer blends, sealing layers that contain the OBC/HDPE polymer blends and products that include such sealing layers and cling layers. The multilayer films include a OBC/HDPE blend layer co-extruded with metallocene catalyzed LLDPE, Ziegler-Natta catalyzed LLDPE, LDPE, MDPE, HDPE, EVA, EMA, polypropylene or other polymers.

This disclosure also includes products having specific end-uses, particularly film-based products for which the toughness properties are desirable, such as, lamination films, stretch films, shipping sacks, trash bags and liners, industrial liners, produce bags, flexible and food packaging (e.g., fresh cut produce packaging, frozen food packaging), personal care films, pouches, medical film products (such as intravenous fluid bags), diaper films, feminine hygiene films and housewrap. Products may also include packaging as bundling, packaging and unitizing a variety of products including various foodstuffs, rolls of carpet, liquid containers and various like goods normally containerized and/or palletized for shipping, storage, and/or display. Products may also include surface protection applications, with or without stretching, such as in the temporary protection of surfaces during manufacturing, transportation, etc. There are many potential applications of films produced from the polymer blends described herein that will be apparent to those skilled in the art.

The following examples illustrate the disclosure. The particular materials and amounts thereof, as well as other conditions and details, recited in these examples should not be used to limit this disclosure. Unless stated otherwise all percentages, parts and ratios are by weight. The melt extrusion and film formation conditions were the same in all the examples.

The following materials were used in the examples:

OBC - an ethylene/α-olefin block interpolymer resin having a density of 0.866 g/cm$^3$ and a melt index of 5.0 g/10 min commercially available from The Dow Chemical Company under the trade designation INFUSE™;
HDPE - a high density polyethylene polymer resin having a density of 0.962 g/cm$^3$ and a melt index of 6.5 g/10 min commercially available from LyondellBasell under Equistar;
LDPE - a low density polyethylene polymer resin having a density of 0.915 g/cm$^3$ and a melt index of 12 g/10 min commercially available from ExxonMobil under Exxon LD 202.48;
LLDPE - a linear low density polyethylene polymer resin having a density of 0.918 g/cm$^3$ and a melt index of 3.5 g/10 min commercially available from ExxonMobil under Exxon EM 3518.

Comparative Example

Three-layer films were formed by co-extrusion. A core layer was formed of an ethylene/α-olefin block interpolymer resin (OBC). Skin layers were formed of a blend comprising about 50 wt% of Low Density Polyethylene polymer (LDPE), and about 50 wt% of Linear Low Density Polyethylene polymer (LLDPE).

Example 1

Monolayer films were formed using the same process of making the three-layer films in the Comparative Example except that the skin extruders were left running at a screw speed of 1 rpm in order to minimize thermal degradation. The monolayer films were made from a blend comprising about 90 wt% of the ethylene/olefin block interpolymer resin (OBC) and about 10 wt% of the high density polyethylene polymer (HDPE).

Example 2

The procedure of Example 1 was repeated except this film was composed of about 70% by weight of the ethylene/olefin block interpolymer resin (OBC) and about 30% by weight of the high density polyethylene polymer (HPDE).

Composition and Film Testing

Differential scanning calorimetry (DSC) is a common technique that can be used to examine the melting and crystallization of semi-crystalline polymers. General principles of DSC measurements and applications of DSC to study semi-crystalline polymers are described in the standard text (for instance, E. A. Turi, ed., Thermal Characterization of Poly Materials, Academic Press, 1981).

A DSC thermogram of heat flow vs. temperature was obtained for the comparative and example films by heating specimens cut from the films from 0 °C to 200°C at a rate of 10°C/min, cooling to 0°C at a rate of 10°C/min, and reheating to 200°C at a rate of 10 °C/min. Table 1 shows the DSC results for the compositions of the examples.

TABLE 1. Results of Differential Scanning Calorimetry (DSC)

| First Heat | | Comparative Example | Example 1 | Example 2 |
|---|---|---|---|---|
| | Peak Position (ºC) | 121 | 126 | 128 |
| | Heat of Fusion (J/g) | 27 | 31 | 67 |
| | Degree of Crystallinity (%) | 9 | 11 | 23 |
| Recrystallization | Peak Position (°C) | 108 | 116 | 119 |
| | Heat of Fusion (J/g) | 29 | 34 | 82 |
| | Degree of Crystallinity (%) | 10 | 12 | 29 |

(continued)

| First Heat | | Comparative Example | Example 1 | Example 2 |
|---|---|---|---|---|
| Second Heat | Peak Position (°C) | 122 | 126 | 128 & 131 |
| | Heat of Fusion (J/g) | 28 | 34 | 82 |
| | Degree of Crystallinity (%) | 10 | 12 | 29 |

All of the thermograms revealed a single well defined melting or crystallization peak with a single maximum. In the case of the second melt of Example 2, two closely spaced maxima were observed. The data show that as the level of the HDPE polymer in the blends increased from about 10% to about 30%, the peak positions moved to higher temperatures and the degrees of crystallinity increased significantly. The slightly higher peak position and degree of crystallinity of the monolayer blend (Examples 1 and 2 compared with Comparative Example) indicate that the HDPE polymer and linear OBC may be co-crystallizing to form slightly larger crystallites than the tri-layer blend of OBC core with the LDPE/LLDPE skins.

One inch wide specimens were cut from film samples for tensile strength and hysteresis testing. Tensile strength values (tensile loads at elongations 5, 10, 25 and 100%, load at yield, strain at yield, peak load and elongation at break) were measured in both the machine direction (MD) and the transverse direction (TD) according to ASTM D882-97. The machine direction (MD) of a film may be defined as the direction in which the film is transported during its production or the direction in which the film is taken up onto rolls. The transverse direction (TD) may be defined as being perpendicular to the MD within the plane of the film. Table 2 shows the tensile strength data of MD and TD normalized to a common basis weight of 50 grams/square meter (gsm).

TABLE 2 Tensile Strength Data Normalized to a Common Basis Weight of 50 gsm

| | | Comparative Example | Example 1 | Example 2 |
|---|---|---|---|---|
| Core Composition | OBC (%) | 100 | 90 | 70 |
| | HDPE (%) | 0 | 10 | 20 |
| Skins | | Yes | No | No |
| Basis Weight (gsm) | | 48.0 | 38.4 | 45.2 |
| MD | Load at 5% strain (g) | 123 | 64 | 401 |
| | Load at 10% strain (g) | 229 | 118 | 602 |
| | Load at 25% strain (g) | 371 | 229 | 768 |
| | Load at 100% strain (g) | 506 | 383 | 794 |
| | Load at yield (g) | | | 802 |
| | Strain at yield (%) | | | 43 |
| | Peak Load (g) | 1,189 | 2,645 | 2,559 |
| | Elongation at break (%) | 527 | 827 | 748 |
| TD | Load at 5% strain (g) | 97 | 61 | 253 |
| | Load at 10% strain (g) | 156 | 110 | 396 |
| | Load at 25% strain (g) | 219 | 181 | 543 |
| | Load at 100% strain (g) | 279 | 238 | 636 |
| | Load at yield (g) | 271 | 292 | 654 |
| | Strain at yield (%) | 84 | 295 | 147 |
| | Peak Load (g) | 742 | | 2,026 |
| | Elongation at break (%) | 689 | >1,250 | 952 |

Hysteresis properties, namely force relaxation and tensile set, are often measured in accordance with a laboratory test procedure utilizing a test instrument which applies a load to a specimen through a constant rate of motion.

By way of example only, one such test instrument is an Instron Tensile Tester--Model #1130. The hysteresis data of both MD and TD were measured. The test procedure is run in two parts on each specimen. The first cycle applies a load to the specimen and places the sample in tension to achieve the desired strain (% elongation), holds at that strain for a designated time, and then returns to an unloaded condition. The curve which is generated during this cycle is used to calculate force relaxation. The second cycle applies a load and places the sample in tension to obtain the desired strain (% elongation) as in the first cycle, holds that strain for a designated time, and then returns to an unloaded condition. The tensile set is calculated from this second curve. Table 3 shows the hysteresis data of MD and TD normalized to a common basis weight of 50 gsm.

For the hysteresis data of Table 3, specimens were taken from various areas across the film and were cut 1.0 inch wide by about 7.0 inches long. The polymer test samples were free of surface damage, wrinkles, and blemishes which might have a detrimental effect on the test results. Testing was carried out at about $23\pm2°C$ and a humidity of about $50\%\pm2\%$. A test specimen was placed in the jaws of the tensile testing machine which were set 3.0 inches apart (original gage length), the jaws were moved apart at a rate of 20 inches/minute to reach 50 % elongation and the force (f1) was noted. The sample was held for 30 seconds at 50 % elongation and the force (f2) was noted again. The sample was then returned to 0 % elongation at a rate of 20 inches/minute. After a rest period of 30 seconds, the test sample was again extended to 50 % elongation, held for 30 seconds, and returned to 0 % elongation. During this second cycle, the take-up distance or elongation, *a,* of the film before the film resists deformation and a load was applied by the testing machine was noted.

After the test data are collected, it is possible to compute the force relaxation and the set for each sample. Force relaxation is defined as the loss in force (f1-f2) during the hold phase of the first test cycle. The loss may be expressed as a force relaxation % = (f1-f2)/f1*100%. Set, also known as tensile set, is a measure of deformation of the sample as a result of the initial elongation, hold, and relax procedure. The set is the ratio of elongation, *a,* of the sample before a load is applied, as measured in the second test cycle, divided by the original gage length of the sample. This may also be expressed as a set %=*a*/gage length* 100%.

TABLE 3 Hysteresis Data Normalized to a common basis weight of 50 gsm

|  |  | Comparative Example | Example 1 | Example 2 |
|---|---|---|---|---|
| Core Composition | OBC (%) | 100 | 90 | 70 |
|  | HDPE (%) | 0 | 10 | 20 |
| Skins | | Yes | No | No |
| Basis Weight (gsm) | | 48.0 | 38.4 | 45.2 |

(continued)

|  |  |  | Comparative Example | Example 1 | Example 2 |
|---|---|---|---|---|---|
| MD | Loading at 25% strain cycle 1 (N) | | 3.66 | 2.26 | 7.54 |
| | Loading at 50% strain cycle 1 (N) | | 4.50 | 3.21 | 7.87 |
| | Peak Load cycle 1 (N) | | 4.50 | 3.21 | 7.87 |
| | Unloading force at 25% strain cycle 1 (N) | | 0.55 | 0.51 | 0.00 |
| | Unloading force at 50% strain cycle 1 (N) | | 2.56 | 2.07 | 3.93 |
| | Unloading Peak Load 1 (N) | | 3.27 | 2.38 | 4.64 |
| | Loading at 25% strain cycle 2 (N) | | 1.97 | 1.86 | 4.58 |
| | Loading at 50% strain cycle 2 (N) | | 3.68 | 3.00 | 7.60 |
| | Peak Load cycle 2 (N) | | 4.03 | 3.03 | 7.61 |
| | Unloading force at 25% strain cycle 2 (N) | | 0.51 | 0.48 | 0.01 |
| | Unloading force at 50% strain cycle 2 (N) | | 2.55 | 2.03 | 3.72 |
| | Force Relaxation cycle 1 (%) | | 3.25 | 2.34 | 4.52 |
| | Force Relaxation cycle 2 (%) | | 17.4 | 20.9 | 36.5 |
| | Unloading Peak Load cycle 2 (N) | | 14.9 | 20.2 | 36.4 |
| | Tensile Set cycle 2 (%) | | 5.58 | 3.16 | 11.74 |
| | | | | | |
| TD | Loading at 25% strain cycle 1 (N) | | 2.00 | 1.80 | 5.22 |
| | Loading at 50% strain cycle 1 (N) | | 2.29 | 2.17 | 5.80 |
| | Peak Load cycle 1 (N) | | 2.29 | 2.17 | 5.80 |
| | Unloading force at 25% strain cycle 1 (N) | | 0.32 | 0.36 | 0.11 |
| | Unloading force at 50% strain cycle 1 (N) | | 1.51 | 1.38 | 3.10 |
| | Unloading Peak Load 1 (N) | | 1.75 | 1.56 | 3.56 |
| | Loading at 25% strain cycle 2 (N) | | 1.36 | 1.30 | 3.06 |
| | Loading at 50% strain cycle 2 (N) | | 2.17 | 2.00 | 5.43 |
| | Peak Load cycle 2 (N) | | 2.18 | 2.00 | 5.43 |
| | Unloading force at 25% strain cycle 2 (N) | | 0.28 | 0.32 | 0.03 |
| | Unloading force at 50% strain cycle 2 (N) | | 1.48 | 1.34 | 2.96 |
| | Force Relaxation cycle 1 (%) | | 1.74 | 1.52 | 3.42 |
| | Force Relaxation cycle 2 (%) | | 10.9 | 21.4 | 33.5 |
| | Unloading Peak Load cycle 2 (N) | | 16.7 | 19.9 | 34.0 |
| | Tensile Set cycle 2 (%) | | 6.83 | 5.65 | 9.57 |

The tensile strength data indicate that the mono layer film has improved elongation at break and significant increase in normalized peak load compared to the tri-layer film. The hysteresis data show that the force relaxation values of the monolayer film are similar to those of the tri-layer film.

**Claims**

1. A polymer blend composition comprising:

    (a) an ethylene/α-olefin block interpolymer produced using a chain shuttling catalyst, the interpolymer having:

        (i) an average block index greater than zero and up to about 1.0, and
        (ii) a molecular weight distribution $M_w/M_n$ greater than about 1.3; and

    (b) a high density polyethylene polymer having a density greater than about 0.940 g/cm$^3$,
    (c) wherein the blend composition comprises from about 70 wt% to about 90 wt% of the ethylene/α-olefin block interpolymer and from about 10 wt% to about 30 wt% of the high density polyethylene polymer, based on the total combined weight of the ethylene/α-olefin block interpolymer and the high density of polyethylene polymer.

2. The polymer blend composition of claim 1, wherein the ethylene/α-olefin block interpolymer has a density of about 0.860 to about 0.925 g/cm$^3$.

3. The polymer blend composition of claim 1, wherein the ethylene/α-olefin block interpolymer has a density of about 0.867 to about 0.910 g/cm$^3$.

4. The polymer blend composition of claim 1, wherein the ethylene/α-olefin block interpolymer has a melt index of about 0.01 to about 100 g/10 min.

5. The polymer blend composition of claim 1, wherein the ethylene/α-olefin block interpolymer is a linear and multi-block copolymer with at least three blocks.

6. The polymer blend composition of claim 1, wherein the ethylene content of the ethylene/α-olefin block interpolymer is at least 50 mole percent.

7. The polymer blend composition of claim 1, wherein the ethylene/α-olefin block interpolymer is a copolymer of ethylene and at least one comonomer selected from the group consisting of $C_3$ to $C_{20}$ α-olefins.

8. The polymer blend composition of claim 1, wherein the ethylene/α-olefin block interpolymer comprises at least one hard segment and at least one soft segment.

9. The polymer blend composition of claim 8, wherein the hard segments comprise at least about 98% of ethylene by weight.

10. The polymer blend composition of claim 8, wherein the soft segments comprise less than 50% of ethylene by weight.

11. The polymer blend composition of claim 1, wherein the high density polyethylene polymer is a homopolymer polyethylene.

12. The polymer blend composition of claim 1, wherein the high density polyethylene polymer has a melt index of from about 0.01g/10 min to about 45 g/10 min.

13. A film having at least one layer comprising a polymer blend composition, said polymer blend composition comprising:

    (a) an ethylene/α-olefin block interpolymer produced using a chain shuttling catalyst, the interpolymer having:

        (i) an average block index greater than zero and up to about 1.0, and
        (ii) a molecular weight distribution $M_w/M_n$ greater than about 1.3; and

    (b) a high density polyethylene polymer having a density greater than about 0.940 g/cm3,

(c) wherein the blend comprises from about 70 wt% to about 90 wt% of the ethylene/α-olefin block interpolymer and from about 10 wt% to about 30 wt% of the high density polyethylene polymer, based on the total combined weight of the ethylene/α-olefin block interpolymer and the high density of polyethylene polymer.

**14.** The monolayer film of claim 13, wherein the high density polyethylene polymer is homopolymer ethylene.

**15.** An article, comprising a substrate and a film disposed on the substrate, the film comprising a polymer blend composition, said polymer blend composition comprising:

(a) an ethylene/α-olefin block interpolymer produced using a chain shuttling catalyst technology, the interpolymer having:

(i) an average block index greater than zero and up to about 1.0, and
(ii) a molecular weight distribution $M_w/M_n$ greater than about 1.3; and

(b) a high density polyethylene polymer having a density greater than about 0.940 g/cm3, wherein the blend comprises from about 70 wt% to about 90 wt% of the ethylene/α-olefin block interpolymer and from about 10 wt% to about 30 wt% of the high density polyethylene polymer, based on the total combined weight of the ethylene/α-olefin block interpolymer and the high density of polyethylene polymer.

## EUROPEAN SEARCH REPORT

**Application Number**

EP 10 19 1908

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/101928 A2 (DOW GLOBAL TECHNOLOGIES INC [US]; WALTON KIM LOUIS [US]; HUGHES MORGAN) 28 September 2006 (2006-09-28) <br> * abstract; claims 1-23 * <br> * page 33, paragraph 101 * <br> * page 35, paragraph 106 * <br> ----- | 1-15 | INV. <br> C08L23/08 <br> C08L53/00 <br> C08J5/18 |
| X | US 2009/264844 A1 (AUTRAN JEAN-PHILIPPE MARIE [US] ET AL) 22 October 2009 (2009-10-22) <br> * abstract; claims 1-20 * <br> ----- | 1-15 | |
| X | US 2006/211819 A1 (HOENIG STEPHEN M [US] ET AL) 21 September 2006 (2006-09-21) <br> * abstract; claims 1-38 * <br> * example 20 * <br> ----- | 1-15 | |
| A | US 2006/199030 A1 (LIANG WENBIN [US] ET AL LIANG WENBIN [US] ET AL) 7 September 2006 (2006-09-07) <br> * abstract; claims 1-24 * <br> * page 24, paragraph 201 * <br> ----- | 1-15 | TECHNICAL FIELDS SEARCHED (IPC) <br><br> C08L <br> C08J |

The present search report has been drawn up for all claims

| Place of search | Date of completion of the search | Examiner |
|---|---|---|
| The Hague | 4 January 2011 | Bergmans, Koen |

**ANNEX TO THE EUROPEAN SEARCH REPORT
ON EUROPEAN PATENT APPLICATION NO.**

EP 10 19 1908

This annex lists the patent family members relating to the patent documents cited in the above-mentioned European search report.
The members are as contained in the European Patent Office EDP file on
The European Patent Office is in no way liable for these particulars which are merely given for the purpose of information.

04-01-2011

| Patent document cited in search report | | Publication date | Patent family member(s) | | Publication date |
|---|---|---|---|---|---|
| WO 2006101928 | A2 | 28-09-2006 | AU 2006227667 A1<br>BR PI0609839 A2<br>CA 2601265 A1<br>EP 1858943 A2<br>JP 2008540696 T | | 28-09-2006<br>04-05-2010<br>28-09-2006<br>28-11-2007<br>20-11-2008 |
| US 2009264844 | A1 | 22-10-2009 | WO 2010085280 A1 | | 29-07-2010 |
| US 2006211819 | A1 | 21-09-2006 | NONE | | |
| US 2006199030 | A1 | 07-09-2006 | US 2009324914 A1 | | 31-12-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7557147 B
- US 7608668 B
- US 2007167314 A
- US 20080311812 A

**Non-patent literature cited in the description**

- The Wiley Encyclopedia of Packaging Technology. John Wiley and Sons, Inc, 1997
- Thermal Characterization of Poly Materials. Academic Press, 1981